# EUROPEAN PATENT SPECIFICATION

(11) **EP 2 079 602 B1**
(45) Date of publication and mention of the grant of the patent: **27.06.2012**
(21) Application number: 07835289.5
(22) Date of filing: 03.10.2007
(51) Int. Cl.: B60K 28/16, B60W 10/02, B60W 30/18, B60W 40/06, F16D 48/08

(54) **A SYSTEM AND A METHOD FOR CONTROLLING AN OPERATION OF STARTING A MOTOR VEHICLE STANDING STILL.**
SYSTEM UND VERFAHREN ZUR STEUERUNG DES STARTBETRIEBS EINES STILLSTEHENDEN KRAFTFAHRZEUGS
SYSTÈME ET PROCÉDÉ POUR COMMANDER UNE OPÉRATION DE DÉMARRAGE D'UN VÉHICULE MOTORISÉ IMMOBILE

(30) Priority: 31.10.2006 SE 0602288
(43) Date of publication of application: 22.07.2009
(73) Proprietor: Scania CV AB (publ), 151 87 Södertälje (SE)
(72) Inventor: BOSTRÖM, Richard, S-155 30 Nykvarn (SE)
(86) International application number: PCT/SE2007/050704
(87) International publication number: WO 2008/054301

(56) References cited:
- EP-A1- 1 681 196
- WO-A1-2004/005744
- US-A- 4 942 950
- US-A- 4 942 950
- US-A1- 2002 045 981
- US-B2- 6 846 268

## Description

### TECHNICAL FIELD

The present invention relates to a system for controlling an operation of starting a motor vehicle standing still on a road surface, said motor vehicle being provided with an engine, an automated mechanical transmission as gearbox , a clutch for connecting and disconnecting an output shaft of the engine with respect to an input shaft of said gearbox, and an accelerator member adapted to be actuated for requesting a torque to be transmitted through the clutch from the engine to said input shaft and through an output shaft of said gearbox to a drive shaft of the vehicle, said system comprising a control unit for controlling the clutch and which is adapted, in a said operation of starting, to control the degree of connection of the clutch and by that the torque transmitted from the engine to the input shaft of the gearbox according to a determined relationship between this torque and the position of the accelerator member. The invention also relates to a method for controlling an operation of starting such a motor vehicle. Furthermore, the invention relates to a computer program comprising computer program code for implementing such a method, a computer program product comprising a data storage medium readable by an electronic control unit and having said computer program stored thereon, and an electronic control unit.

### BACKGROUND ART

The present invention is applicable to motor vehicles provided with an automated mechanical transmission provided with an automatically controlled clutch and gearbox, especially heavy motor vehicles such as lorries, towing vehicles and buses. Furthermore, it is pointed out that "starting a motor vehicle" in this disclosure means driving away a motor vehicle from a state of standing still. "Road surface" is to be interpreted broadly and covers all types of areas prepared for driving, such as besides ordinary roads parking and loading areas used for trucks.

When starting a motor vehicle of the type defined above the position of the accelerator member, normally an accelerator pedal, decides the magnitude of the clutch torque, i.e. the torque transmitted from the engine to the input shaft of the gearbox. Accordingly, the more the driver presses such an accelerator pedal down the more firmly the clutch connects the output shaft of the engine and the input shaft of the gearbox and by that the higher the clutch torque will be, until the clutch provides a fully engaged connection of said output shaft to said input shaft. It is of course normally desired to start the motor vehicle as quickly as possible from the standing still state. However, when said road surface is slippery it is important that the changes of the clutch torque take place slowly, since there is otherwise a risk that the wheels will loose the grip and start to spin. This puts the skill of the driver to a severe test, especially since the driver is not always aware of the risk of a slippery road surface when the motor vehicle is to be started. The necessary way of fine adjustment of said clutch torque by fine regulation of said accelerator member may be very tricky, so that there is an immediate risk that the wheels of the vehicle start to spin even if the driver is aware of the slippery road surface.

US 6 846 268 describes a method of controlling a drive train of a motor vehicle, in which the automated transmission is controlled based upon signals generated by the wheel slip control system of the vehicle, and it is described how the automated transmission can be controlled by controlling the closing of the clutch including controlling both when and how quickly the clutch is closed. However, this method is directed to the control of said clutch when driving, and not when starting, for avoiding wheel slip.

US patent 4 942 950, which shows the preamble of claims 1 and 14, describes a method and an apparatus for controlling a clutch to transmit a torque of an engine to drive wheels of the vehicle, when the vehicle is started on a road surface having a low coefficient of friction. The method comprises a step of reducing the clutch torque when slip of the drive wheels is detected when driving away until the drive wheels have ceased to slip on the road surface, in which the clutch torque is controlled as before.

### DISCLOSURE OF THE INVENTION

The object of the present invention is to provide a system for controlling an operation of starting a motor vehicle standing still on a road surface, which makes it more comfortable to the driver of such a motor vehicle to carry out such a starting, also when there is a risk that the vehicle stands on a slippery road surface, than such systems already known.

This object is according to the invention obtained by providing a system of the type according to the introduction, which comprises an arrangement adapted to determine in a said operation of starting, whether there is a risk that said road surface on which the motor vehicle stands is slippery and send information about this determination to said control unit, and that the control unit is adapted to change said determined relationship between the clutch torque and the accelerator member position from a first such relationship in a first mode to a relationship making said clutch torque less sensitive to changes of the position of the accelerator member in a second mode when said arrangement has determined that said risk exists. By simply changing the relationship between the clutch torque and the accelerator member position in this way when said arrangement determines that there is a risk that said road surface on which the motor vehicle stands is slippery the driver has not to carry out any regulation of the clutch through fine regulation of the accelerator member for avoiding abrupt torque increases, but the driver may instead actuate the accelerator member exactly as, or substantially exactly as, if the road surface had a normal friction coefficient, even if the driver knows that the road surface may be slippery. It is pointed out that "slippery" means that the tyres of the vehicle has a low friction coefficient with respect to the road surface, in which "low" is defined as low with respect to normal driving conditions with a good grip of the wheels on the ground. Thus, when the arrangement does not determine that there is a risk that said road surface is slippery the relationship between the accelerator member position and the clutch torque will be according to a first mode, whereas it will change into a second mode only when the arrangement determines that there is a risk that the road surface is slippery.

According to an embodiment of the invention said control unit is adapted to change said relationship between clutch torque and accelerator member position so that a certain change of the accelerator member position results in a smaller increase of the clutch torque when starting the vehicle in said second mode instead of in said first mode. This makes it easier for the driver to start the motor vehicle without any risk of slipping when the road surface may be slippery, since the demands put on a fine regulation of the accelerator member will be much lower in the second mode than in said first mode.

According to another embodiment of the invention said control unit is adapted to control said clutch in said second mode from a state of total disconnection to a state of fully engaged connection of the output shaft of the engine with respect to the input shaft of said gearbox so that the result in clutch torque from a change of accelerator member position will be reduced by 20%-70%, preferably at least 30%, with respect to said first mode. This means that a certain change of the accelerator member position in said second mode will result in a substantially lower increase of said clutch torque and by that torque transmitted to the driving wheels of the vehicle in said second mode than in said first mode substantially reducing the risk of slipping on the road surface. This also means that the accelerator member has in said second mode to be moved more to obtain said fully engaged connection than in said first mode.

According to another embodiment of the invention said control unit is adapted to change said relationship between clutch torque and accelerator member position so that the clutch torque will react more slowly to a change of said accelerator member position in said second mode than in said first mode, so that it will take longer time for the clutch torque to reach a value corresponding to a position of said accelerator member when this has been moved to this position. This means that even if the driver, perhaps unintentionally, actuates the accelerator member comparatively powerfully when starting the vehicle on a slippery road surface the risk of slipping on the road surface will still be low in said second mode, since the clutch torque will in this way not only be less increased, but it will also be more "softly" increased. However, "react more slowly" does not mean that there is any delay between actuation of accelerator member and change of clutch torque; but the clutch torque will still be influenced as soon as the accelerator member is moved. The increase of the clutch torque to the torque corresponding to the new accelerator member position will only take more time, not for very small changes of said position but for considerable changes thereof.

According to another embodiment of the invention the system is adapted to control said operation of starting a motor vehicle further comprising means for sensing rotational speeds of wheels of the vehicle and comparing these rotational speeds for determining whether any wheel is spinning, during driving of said motor vehicle, and said system comprises means adapted to calculate and store information about the torque on a driven wheel axle of the vehicle upon occurrence of said spinning, and said control unit is, in said second mode during the operation of starting the vehicle, adapted to compare the actual torque on said driven wheel axle with said value thereof stored and as soon as said torque comes within a certain distance to said value stored slow down the reaction of the clutch torque to a change of said accelerator member position even more. This means that the clutch torque increase and by that the starting of the vehicle may be even "softer" when the torque on a driven wheel axle comes close to said value reducing the risk of slipping on the road surface even more.

According to another embodiment of the invention, the system comprises means adapted to deliver information about the torque applied to a driven wheel axle to said arrangement, and said arrangement is adapted to determine that there is a risk that said road surface on which the motor vehicle stands is slippery when in driving prior to said operation of starting said comparison have resulted in a mutual difference of said rotational speeds of said wheels indicating spinning and said torque applied on the driven wheel axle of the vehicle was at the same time below a predetermined value. Said second mode may by this suitably be selected when starting the motor vehicle by considering the behaviour of the vehicle in driving within a predetermined time before the operation of starting.

According to another embodiment of the invention the system is used for controlling said operation of starting a motor vehicle having a traction control (TC) apparatus for counteracting slipping of wheels of the vehicle in which said arrangement is adapted to determine that there is a risk that said road surface on which the motor vehicle stands is slippery when said traction control apparatus has been activated in driving within a predetermined time before said operation of starting and the torque upon a driven wheel axle of the vehicle was below a predetermined value during said activation. It is also suitable that the arrangement in this way considers the behaviour of said traction control apparatus in driving within a predetermined time before said operation of starting and neglects activation thereof when the torque upon a driven wheel axle of the vehicle was at the same time high, so that the activation of the traction control apparatus was not a consequence of a slippery road surface.

According to another embodiment of the invention said predetermined value of said torque applied on the driven wheel axle of the vehicle is below 30% of the maximum torque that may be applied on said driven wheel axle at normal friction coefficient at a specified driven axle weight without spinning, which ensures that said spinning or activation of the traction control apparatus may have been due to circumstances involving a risk of a slippery road surface. Normal friction coefficient is here defined as friction coefficient for dry tarmac.

According to another embodiment of the invention said system is used for controlling an operation of starting a motor vehicle comprising a differential lock for locking the differential gear of a driven wheel axle of the vehicle, and said arrangement is adapted to determine that there is a risk that said road surface on which the motor vehicle stands is slippery when said differential lock is activated or was activated in driving within a predetermined time before said operation of starting.

According to another embodiment of the invention the system is used for controlling an operation of starting a motor vehicle having means for sensing possibly occurring or incipient blocking of wheels of the vehicle and/or mutual different rotational speeds of wheels of the vehicle and upon such an occurrence send an ABS-signal to a braking control means of the vehicle when driving the vehicle, and the system comprises means adapted to sense the position of a brake actuating member, such as a brake pedal, said arrangement is adapted to determine that there is a risk that said road surface on which the motor vehicle stands is slippery when during driving within a predetermined time before said operation of starting a said ABS-signal has been created and said brake actuating member was for braking not moved beyond a predetermined position and the contribution of possibly auxiliary brakes, such as a retarder brake and an exhaust brake, to the braking torque was below a predetermined value when said ABS-signal was created. It is suitable that said arrangement in this way also considers the behaviour of the vehicle when braking the vehicle in driving prior to said starting when determining whether there is a risk that said road surface is slippery.

According to another embodiment of the invention said arrangement is adapted to consider a movement of the brake actuating member being less than 30%, preferably less than 20%, of a maximum movement thereof for braking as having reached said predetermined position. This avoids the selection of said second mode when starting the motor vehicle when in driving within a predetermined time before said starting wheels of the vehicle were blocked when braking in spite of a normal friction coefficient of the road surface.

According to another embodiment of the invention said arrangement is adapted to base said determination upon occurrences within a predetermined period of time before said operation of starting, such as 30 minutes, 10 minutes, 5 minutes, 2 minutes or 30 seconds before said operation of starting. How long this period of time shall be may depend upon the circumstances, such as time of the year and how long the motor vehicle has been standing still before the starting. It may also be provided for an adjustment of this period of time by the driver.

The invention also relates to a method having the features defined in claim 14 for controlling an operation of starting a motor vehicle provided with an engine, an automated mechanical transmission as gearbox, a clutch for connecting and disconnecting an output shaft of the engine with respect to an input shaft of said gearbox and an accelerator member adapted to be actuated for requesting a torque to be transmitted from an output shaft of said gearbox to a drive shaft of the vehicle.

The invention also relates to a computer program having the features defined in claim 26, a computer program product having the features defined in claim 31 and an electronic control unit having the features defined in claim 32.

### BRIEF DESCRIPTION OF THE DRAWINGS

The invention will in the following be more closely described by means of embodiment examples, with reference to the appended drawings, where:

Fig 1 is a schematic outline diagram illustrating a system according to the present invention,

Fig 2 is a graph of the clutch torque versus the position of the accelerator pedal of the vehicle according to Fig 1 for starting a motor vehicle standing still according to a normal mode and according to a low friction mode,

Figs 3 and 4 are graphs corresponding to Fig 2 for a system according to another embodiment of the present invention,

Fig 5 is a schematic outline diagram of an electronic unit for implementing the method according to the invention, and

Fig 6 is a flow diagram illustrating a method according to an embodiment of the invention.

### EMBODIMENTS OF THE PRESENT INVENTION

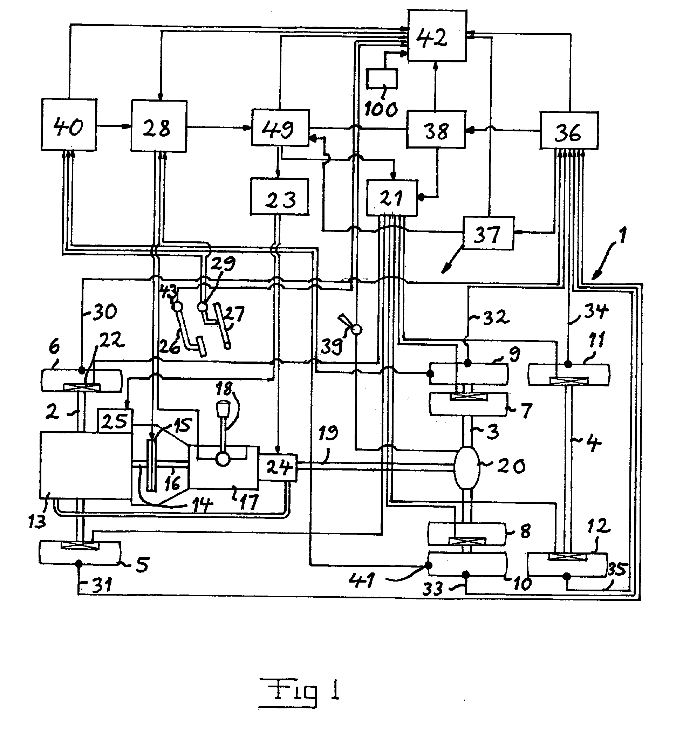

Parts of a motor vehicle 1 in the form of a truck for explaining the present invention are very schematically shown in Fig 1. The vehicle has a front wheel axle 2, a first rear wheel axle 3 in the form of two half shafts and a second rear wheel axle 4. These axles are provided with wheels 5-12, of which the wheels 5, 6 of the front axle 2 are used for steering the vehicle, whereas the wheels 7-10 of the first rear axle 3 are used to drive the vehicle through the driven axle 3. The wheels 11, 12 of the wheel axle 4 may be lifted from the ground and are only used when the vehicle is heavily loaded. Many other wheel configurations than the one shown here are of course within the scope of the invention, and more than one axle may be driven.

The vehicle is further provided with an engine 13 with an output shaft 14 connected through a clutch 15 to an input shaft 16 of a gearbox 17, which here is an automated mechanical transmission, AMT, having a gear shift lever 18 for selecting different modes of Neutral, Drive, Reversing, Parking etc. The gearbox 17 has an output shaft 19 driving the wheel axle 3 through a differential 20.

The vehicle is further provided with a service braking device 21 adapted to act upon at least some wheel axles of the vehicle for obtaining a braking action by controlling service brakes 22 arranged in connection with at least some of the wheels always bearing on the ground when driving the vehicle.

The vehicle also comprises an auxiliary braking device 23 adapted to act upon the driven wheel axle 3 of the vehicle for obtaining a braking action by controlling a retarder brake 24 and an exhaust brake 25 schematically indicated. The retarder brake 24 is here associated with the gearbox 17 and acts on the output shaft 19 of the gearbox.

The vehicle has also a brake actuating member in the form of a brake pedal 26, through which the driver requests a brake torque to be applied to the brakes 22 of the vehicle. An accelerator member in the form of an accelerator pedal 27 is arranged for controlling the injection of fuel into the engine and by that the engine torque and for a determined gear of the gearbox the torque to be transmitted from the output shaft 19 of the gearbox to the drive shaft or driven axle 3 of the vehicle.

A control unit 28 is adapted to control the clutch 15 in an operation of starting the motor vehicle standing still for controlling the degree of connection of the clutch and by that the torque transmitted from the engine to the input shaft 16 of the gearbox according to a determined relationship between this torque and the position of the accelerator member. An accelerator member position sensor 29 is for this sake arranged to send information about the accelerator member position to said control unit 28.

The vehicle also comprises means purely indicated through lines 30-35 running from each wheel for sensing possibly occurring or incipient blocking of wheels of the vehicle and/or mutually different rotational speeds of wheels of the vehicle. Comparing means 36 are arranged to compare these rotational speeds for determining whether any wheel is spinning during driving of the vehicle by means of information from the sensing means 30-35. Said comparing means is adapted to send information about said comparison further to on one hand a traction control (TC) apparatus 37 adapted to take measures for counteracting slipping of wheels of the vehicle, such as braking a single wheel and/or reducing the engine torque, and on the other to a member 38 adapted to create a ABS-signal and send it further to a braking control means 49 when the information coming from said comparing means 36 indicates mutual different rotational speeds of the wheels of the vehicle when braking indicating occurring or incipient blocking of the wheels of the vehicle.

The vehicle has also a differential lock activation means 39, which may be actuated by the driver and is adapted for locking the differential gear 20 for example when the driver judges the road surface to be slippery.

The system according to the invention has means 40 adapted to calculate the torque applied to the driven wheel axle 3 of the vehicle, and it does for this receive information about the engine output torque based upon how much fuel is presently injected into the engine and information about the gear of the gearbox presently engaged. This makes it possible to calculate the drive wheels torque by multiplying the engine torque, the transmission ratio of said gear and the transmission ratio of the differential gear at said wheel axle.

The system according to the invention comprises an arrangement 42 adapted to determine, in an operation of starting the motor vehicle standing still on a road surface, whether there is a risk that said road surface is slippery. The arrangement 42 receives for this sake information from said rotational speed comparing means 36, the traction control apparatus 37, the ABS-signal creating means 38, the differential lock activation means 39, a brake pedal position sensing means 43, the braking control means 49 and said means 40 for calculating the torque of the driven axle of the vehicle. Said arrangement 42 is, based upon information so received, adapted to determine whether there is a risk that said road surface on which the motor vehicle stands is slippery and send information about this determination to said control unit 28. The control unit 28 is adapted to change said determined relationship between the clutch torque and the accelerator member position from a first such relationship in a first mode to a relationship making said clutch torque less sensitive to changes of the position of the accelerator member in a second mode when said arrangement has determined that said risk exists.

Said arrangement 42 is adapted to determine that there is a risk that said road surface on which the motor vehicle stands is slippery when one of the following conditions is fulfilled: the differential lock 39 is activated or was activated in driving within a predetermined time before said operation of starting, said traction control apparatus 37 has been activated in driving prior to the operation of starting and a torque upon the driven wheel axle 3 of the vehicle was below a predetermined value during said activation, when during driving within a predetermined time before said operation of starting a said ABS-signal has been created by the means 38 and the brake pedal 26 was for braking not moved beyond a predetermined position and the contribution of the auxiliary brakes to the braking torque was below a predetermined value when said ABS-signal was created and the comparison of said comparing means 36 indicates spinning while the torque on the driven wheel axle 3 of the vehicle was below a predetermined value. The arrangement is then adapted to consider information of such conditions from the means 36-39 emanating from a predetermined period of time before said operation of starting as discussed above.

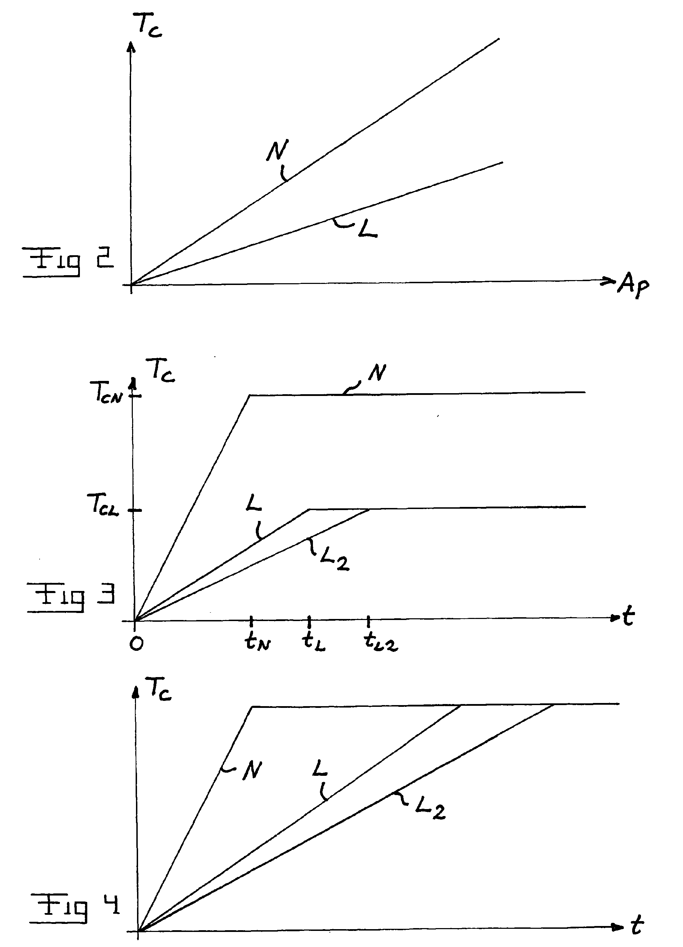

Fig 2 is a graph illustrating the difference between said first mode and said second mode for controlling the clutch 15 and by that the clutch torque when starting the motor vehicle with a system according to Fig 1 standing still on a road surface. The clutch torque T_{c} versus the position Ap of the accelerator member is shown. The line N shows the relationship between clutch torque and accelerator member position in said first mode, whereas the line L shows how the control unit 28 controls the clutch according to a relationship of said clutch torque and the accelerator member position in a second mode when said arrangement 42 has determined that there is a risk that said road surface on which the motor vehicle stands is slippery. It appears that a certain change of the position of the accelerator member in the second mode will result in a substantially smaller increase of the clutch torque than in said first mode, so that the driver of the vehicle may much easier avoid slipping of the wheels upon the road surface when starting the vehicle on a road surface being slippery.

Fig 3 is a graph of the clutch torque Tc requested versus the time t as of a starting time 0 in which the accelerator member is nearly momentarily pressed down by a certain value such as 50% of the maximum value. N illustrates said first mode, and it is shown that a higher clutch torque T_{CN} is obtained for this accelerator member position in said first mode than the torque T_{CL} obtained in the second mode. It may also be seen that said control unit is adapted to control the clutch 15 so that the clutch torque will react more slowly to a change of the accelerator member position in said second mode than in the first mode, so that the time t_{L} for obtaining the clutch torque corresponding to the position of the accelerator member will be longer in the second mode than the corresponding time t_{N} in the first mode.

According to an embodiment of the present invention said control unit is adapted to compare the actual torque on said driven wheel axle when starting the motor vehicle with a stored value thereof obtained upon occurrence of spinning of wheels of the vehicle in driving within a predetermined time before said starting and as soon as this torque comes close to said value stored slow down the reaction of the clutch torque to a change of said accelerator member position even more. The line L₂ illustrates how the start of the vehicle may in such a case be "even softer" with a slower increase of the clutch torque, so that the clutch torque T_{CL} corresponding to the position of the accelerator member is obtained at the time t_{L2}.

Fig 4 is a graph corresponding to Fig 3, but for the case of moving the accelerator member to a position, such as pressed down to 100%, which corresponds to a maximum engine torque at the actual rotational speed thereof.

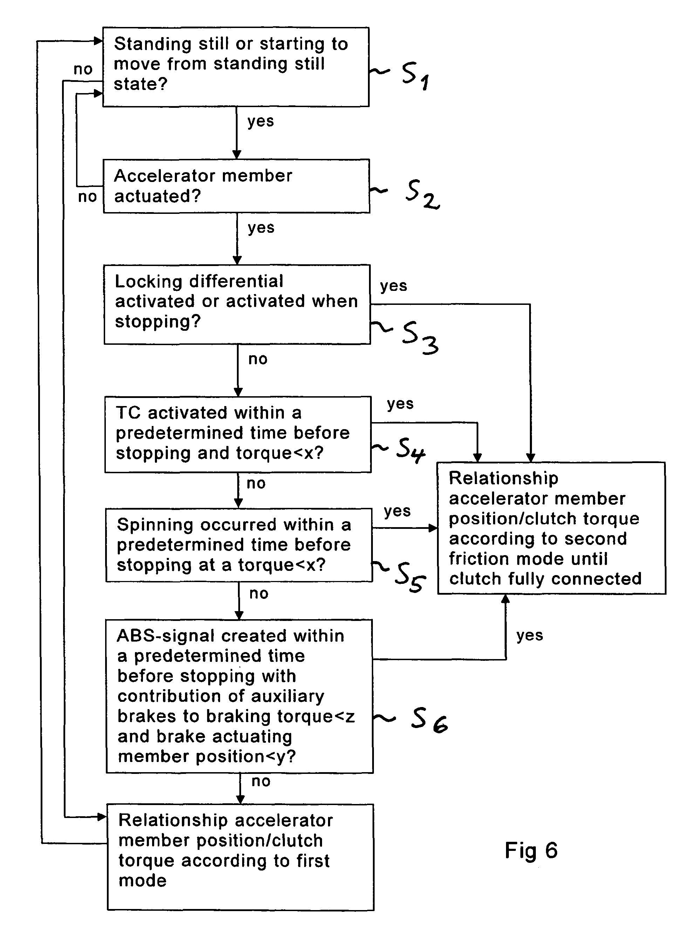

A flow diagram illustrating a method according to an embodiment of the invention is shown in Fig 6. In a first step S1 it is determined whether or not the vehicle is standing still or starting to move from standing still state. When the answer is yes it is in a second step S2 determined whether the accelerator member is activated or not. If the answer to this question is yes it is then in a third step S3 determined whether the differential lock is activated or was activated when stopping the vehicle. When the answer to this question is no it is in a fourth step S4 determined whether the traction control apparatus was activated within a predetermined time before stopping and the torque on the driven wheel axle was at the same time below a predetermined value x. If the answer to this question is no it is in a fifth step S5 determined whether spinning occurred when driving the vehicle within a predetermined time before stopping and the torque on the driven wheel axle was at the same time below a predetermined value x. If the answer to this question is no it is in a sixth step S6 determined whether a ABS-signal was created within a predetermined time before stopping with the contribution of auxiliary brakes to the braking torque below a predetermined value and a brake torque requested below a predetermined value y. If the answer to this question is no the relationship between the accelerator member position and the clutch torque is during the starting of the vehicle controlled to be according to a first mode. The steps S1-S6 are in such a case repeated during the starting of the vehicle as long as the clutch has not reached the fully engaged connection. If, however, the answer to the questions put in any of the steps S3-S6 is yes it is determined that the relation between the accelerator member position and the clutch torque shall be according to a second mode until the clutch is fully connected. Accordingly, when this is for instance determined in the step S3 the steps S4-S6 are not carried out during the starting in question. The step S5 is needed for vehicles having no Traction Control, but it is also advantageous to have when TC is present, since the TC may be switched off or not function properly.

Computer program code for implementing a method according to the invention is suitably included in a computer program, which is loadable directly into the internal memory of a computer, such as the internal memory of a clutch control or engine control unit of the vehicle. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, a magnetic data storage medium in the form of a hard disc, a diskette, a cassette tape etc, or a memory of the type ROM, PROM, EPROM or EEPROM or a Flash memory.

The computer program according to an embodiment of the invention comprises computer program code for causing a computer, e. g. in the form of an electronic unit:

- to determine, in said operation of starting , whether there is a risk that said road surface on which the motor vehicle stands is slippery,
- to control, in said operation of starting, the degree of connection of the clutch and by that the torque transmitted from the engine to the input shaft of the gearbox according to a determined relationship between this torque and the position of the accelerator member, and
- to carry out the control of said clutch while changing said determined relationship between the clutch torque and the accelerator member position from a first such relationship in a first mode to a relationship making said clutch torque less sensitive to changes of the position of the accelerator member in a second mode when it has been determined that a said risk exists.

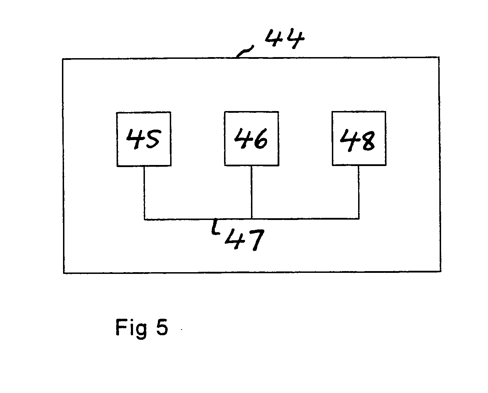

Fig 5 very schematically illustrates an electronic control unit 44 comprising an execution means 45, such as a central processing unit (CPU) for executing computer software. The execution means 45 communicates with a memory 46, for instance of the type RAM, via a data bus 47. The control unit 44 also comprises data storage medium 48, for instance in the form of a memory of the type ROM, PROM, EPROM or EEPROM or a Flash memory. The execution means 45 communicates with the data storage medium 48 via the data bus 47. A computer program comprising computer program for implementing a method according to the invention is stored on the data storage medium 48.

The invention is of course not in any way restricted to the embodiments describes above. On the contrary, many possibilities to modifications thereof will be apparent to a person with ordinary skill in the art without departing from the basic idea of the invention as defined in the appended claims.

It is pointed out that the arrangement may utilize information from more sources than those shown in the embodiments described above for determining whether there is a risk that said road surface on which the motor vehicle stands is slippery, but it is also possible that any of the sources described above is not there or is not utilized.

The system may also have a further actuating member, such as a button, that may be controlled by the driver of the vehicle for activating said second mode. This is especially interesting for vehicles having no differential lock and is indicated by the box 100 in Fig 1.

## Claims

1. A system for controlling an operation of starting a motor vehicle standing still on a road surface, said motor vehicle being provided with:
- an engine, (13)
- an automated mechanical transmission as gearbox (17),
- a clutch (15) for connecting and disconnecting an output shaft of the engine with respect to an input shaft of said gearbox, and
- an accelerator member (27) adapted to be actuated for requesting a torque to be transmitted through the clutch from the engine to said input shaft and through an output shaft of said gearbox to a drive shaft of the vehicle, said system comprising a control unit (28) for controlling the clutch and which is adapted, in a said operation of starting, to control the degree of connection of the clutch and by that the torque transmitted from the engine to the input shaft of the gearbox according to a determined relationship between this torque and the position of the accelerator member,
**characterized in that** the system comprises an arrangement (42) adapted to determine, in a said operation of starting, whether there is a risk that said road surface on which the motor vehicle stands is slippery and send information about this determination to said control unit, and that the control unit (28) is adapted to change said determined relationship between the clutch torque and the accelerator member position from a first such relationship in a first mode to a relationship making said clutch torque less sensitive to changes of the position of the accelerator member in a second mode when said arrangement has determined that said risk exists.

2. A system according to claim 1, **characterized in that** said control unit (28) is adapted to change said relationship between clutch torque (Tc) and accelerator member position (Ap) so that a certain change of the accelerator member position results in a smaller increase of a clutch torque when starting the vehicle in said second mode instead of in said first mode.

3. A system according to claim 2, **characterized in that** said control unit (28) is adapted to control said clutch (15) in said second mode from a state of total disconnection to a state of a fully engaged connection of the output shaft (14) of the engine (13) with respect to the input shaft (16) of said gearbox (17) so that the result in clutch torque (Tc) from a change of accelerator member position (Ap) will be reduced by 20%-70%, preferably at least 30%, with respect to said first mode.

4. A system according to any of the preceding claims, **characterized in that** said control unit (28) is adapted to change said relationship between clutch torque and accelerator member position so that the clutch torque (Tc) will react more slowly to a change of said accelerator member position (Ap) in said second mode than in said first mode, so that it will take longer time for the clutch torque to reach a value corresponding to a position of said accelerator member when this has been moved to this position.

5. A system according to claim 4 for controlling said operation of starting a motor vehicle further comprising means (30-35) for sensing rotational speeds of wheels of the vehicle and comparing (36) these rotational speeds for determining whether any wheel is spinning, during driving of said motor vehicle, **characterized in that** said system comprises means (40) adapted to calculate and store information about the torque on a driven wheel axle (3) of the vehicle upon occurrence of said spinning, and that said control unit (28) is, in said second mode during the operation of starting the vehicle, adapted to compare the actual torque on said driven wheel axle with said value thereof stored and as soon as said torque comes within a certain distance to said value stored slow down the reaction of the clutch torque to a change of said accelerator member position even more.

6. A system according to any of the preceding claims for controlling said operation of starting a motor vehicle further comprising means (30-35) for sensing rotational speeds of wheels of the vehicle and comparing (36) these rotational speeds for determining whether any wheel is spinning, during driving of said motor vehicle, **characterized in that** the system comprises means (40) adapted to deliver information about the torque applied to a driven wheel axle to said arrangement (42), and that said arrangement is adapted to determine that there is a risk that said road surface on which the motor vehicle stands is slippery when in driving within a predetermined time before said operation of starting said comparison have resulted in a mutual difference of said rotational speeds of said wheels indicating spinning and said torque applied on the driven wheel axle of the vehicle was at the same time below a predetermined value.

7. A system according to any of the preceding claims for controlling said operation of starting a motor vehicle having a traction control (TC) apparatus (37) for counteracting slipping of wheels of the vehicle, **characterized in that** said arrangement (42) is adapted to determine that there is a risk that said road surface on which the motor vehicle stands is slippery when said traction control apparatus has been activated within a predetermined time before said operation of starting and a torque upon a driven wheel axle of the vehicle was below a predetermined value during said activation.

8. A system according to claim 6 or 7, **characterized in that** said predetermined value of said torque applied on a driven wheel axle of the vehicle is below 30% of the maximum torque that may be applied on said driven wheel axle at normal friction coefficient at a specified driven axle weight without spinning.

9. A system according to any of the preceding claims for controlling an operation of starting a motor vehicle comprising a differential lock (39) for locking the differential gear (20) of a driven wheel axle of the vehicle, **characterized in that** said arrangement (42) is adapted to determine that there is a risk that said road surface on which the motor vehicle stands is slippery when said differential lock is activated or was activated in driving within a predetermined time before said operation of starting.

10. A system according to any of the preceding claims for controlling an operation of starting a motor vehicle having means (38) for sensing possibly occurring or incipient blocking of wheels of the vehicle and/or mutually different rotational speeds of wheels of the vehicle and upon such an occurrence send an ABS-signal to a braking control means (49) of the vehicle when driving the vehicle, **characterized in that** the system comprises means (43) adapted to sense the position of a brake actuating member, such as a brake pedal, that said arrangement (42) is adapted to determine that there is a risk that said road surface on which the motor vehicle stands is slippery when during driving within a predetermined time before said operation of starting a said ABS-signal has been created and said brake actuating member was for braking not moved beyond a predetermined position and the contribution of possibly auxiliary brakes, such as a retarder brake (24) and an exhaust brake (25), to the braking torque was below a predetermined value when said ABS-signal was created.

11. A system according to claim 10, **characterized in that** said arrangement (42) is adapted to consider a movement of the brake actuating member being less than 30%, preferably less than 20%, of a maximum movement thereof for braking as having reached said predetermined position.

12. A system according to any of claims 6-11, **characterized in that** said arrangement (42) is adapted to base said determination upon occurrences within a predetermined period of time before said operation of starting, such as 30 minutes, 10 minutes, 5 minutes, 2 minutes or 30 seconds-before said operation of starting.

13. A system according to any of the preceding claims, **characterized in that** it comprises an actuating member (100) controllable by the driver for changing from said first to said second mode.

14. A method for controlling an operation of starting a motor vehicle standing still on a road surface, said motor vehicle being provided with:
- an engine (13),
- an automated mechanical transmission as gearbox (17),
- a clutch (15) for connecting and disconnecting an output shaft of the engine with respect to an input shaft of said gearbox, and
- an accelerator member (27) adapted to be actuated for requesting a torque to be transmitted through the clutch from the engine to said input shaft and through an output shaft of said gearbox to a drive shaft of the vehicle,
the method comprising the step of:
- controlling, in said operation of starting, the degree of connection of the clutch and by that the torque transmitted from the engine to the input shaft of the gearbox according to a determined relationship between this torque and the position of the accelerator member,
**characterized in that** the method further comprises the steps of:
- determining, in a said operation of starting, whether there is a risk that said road surface on which the motor vehicle stands is slippery, and
- controlling said clutch (15) while changing said determined relationship between the clutch torque (Tc) and the accelerator member position (Ap) from a first such relationship in a first mode to a relationship making said clutch torque less sensitive to changes of the position of the accelerator member in a second mode when it has been determined that a said risk exists.

15. A method according to claim 14, **characterized in that** in said step of controlling said clutch said relationship between the clutch torque (Tc) and accelerator member position (Ap) is changed so that a certain change of the accelerator member position results in a smaller increase of a clutch torque when starting the vehicle in said second mode instead of in said first mode.

16. A method according to claim 15, **characterized in that** in said step of controlling said clutch (15) in said second mode from a state of total disconnection to a state of fully engaged connection of the output shaft of the engine with respect to the input shaft of said gearbox this control is carried out so that the result in clutch torque from a change of accelerator member position will be reduced by 20% - 70%, preferably at least 30%, with respect to said first mode.

17. A method according to any of claims 14-16, **characterized in that** in said step of controlling said clutch (15) said relationship between clutch torque (Tc) and accelerator member position is changed so that the clutch torque will react more slowly to a change to said accelerator member position in said second mode than in said first mode, so that it will take longer time for the clutch torque to reach a value corresponding to a position of said accelerator member when this has been moved to this position.

18. A method according to claim 17 for controlling said operation of starting a motor vehicle having means (30-35) for sensing rotational speeds of wheels of the vehicle and comparing these rotational speeds for determining whether any wheel is spinning, during driving of said motor vehicle, **characterized in that** it comprises a step of calculating and store information about the torque on a driven wheel axle of the vehicle upon occurrence of said spinning, and that in said second mode, during the operation of starting the vehicle, the actual torque on said driven wheel axle is compared with said value thereof stored and as soon as said torque comes within a certain distance to said value stored the reaction of the clutch torque to a change of said accelerator member position is slowed down even more.

19. A method according to any of claims 14-18 for controlling said operation of starting a motor vehicle having means (30-35) for sensing rotational speeds of wheels of the vehicle and comparing these rotational speeds for determining whether any wheel is spinning, during driving of said motor vehicle, **characterized in that** information about the torque applied to a driven wheel axle (3) of the vehicle is obtained, and that in said determining step it is determined that there is a risk that said road surface on which the motor vehicle stands is slippery when in driving within a predetermined time before said operation of starting said comparison have resulted in a mutual difference of said rotational speeds of said wheels indicating spinning and said torque applied on the driven wheel axle of the vehicle was at the same time below a predetermined value.

20. A method according to any of claims 14-19 for controlling said operation of starting a motor vehicle having a traction control (TC) apparatus (37) for counteracting slipping of wheels of the vehicle, **characterized in that** in said step of determining it is determined that there is a risk that said road surface on which the motor vehicle stands is slippery when said traction control apparatus has been activated in driving within a predetermined time before said operation of starting and a torque upon a driven wheel axle of the vehicle was below a predetermined value during said activation.

21. A method according to claim 19 or 20, **characterized in that** said predetermined value of said torque applied on a driven wheel axle (3) of the vehicle is below 30% of the maximum torque that may be applied on said driven wheel axle at normal friction coefficient at a specified driven axle weight without spinning.

22. A method according to any of claims 14-21 for controlling an operation of starting a motor vehicle comprising a differential lock (39) for locking the differential gear (20) of a driven wheel axle (3) of the vehicle, **characterized in that** in said step of determining it is determined that there is a risk that said road surface on which the motor vehicle is slippery when said differential lock is activated or was activated in driving within a predetermined time before said operation of starting.

23. A method according to any of claims 14-22 for controlling an operation of starting a motor vehicle having means (38) for sensing possibly occurring or incipient blocking of wheels of the vehicle and/or mutually different rotational speeds of wheels of the vehicle and upon such an occurrence send an ABS-signal to a braking control means (49) of the vehicle when driving the vehicle, **characterized in that** it comprises a step of sensing the position of a brake actuating member (26), such as a brake pedal, and that in said step of determining it is determined that there is a risk that said road surface on which the motor vehicle stands is slippery when during driving within a predetermined time before said operation of starting a said ABS-signal has been created and said brake actuating member was for braking not moved beyond a predetermined position and the contribution of possibly auxiliary brakes, such as a retarder brake (24) and an exhaust brake (25), to the braking torque was below a predetermined value when said ABS-signal was created.

24. A method according to claim 23, **characterized in that** a movement of the brake actuating member being less than 30%, preferably less than 20%, of a maximum movement thereof for braking is considered as having reached said predetermined position.

25. A method according to any of claims 19-24, **characterized in that** said determination is based upon occurrences within a predetermined period of time before said operation of starting, such as 30 minutes, 10 minutes, 5 minutes, 2 minutes or 30 seconds before said operation of starting.

26. A computer program loadable into the internal memory of a computer, which computer program comprises computer program code for causing the computer, for a motor vehicle provided with an engine (13), an automated mechanical transmission as gearbox (17), a clutch (15) for connecting and disconnecting an output shaft (14) of the engine with respect to an input shaft (16) of said gearbox, and an accelerator member (27) adapted to be actuated for requesting a torque to be transmitted through the clutch from the engine to said input shaft and through an output shaft of said gearbox to a drive shaft of the vehicle:
- to determine, in said operation of starting, whether there is a risk that said road surface on which the motor vehicle stands is slippery,
- to control, in said operation of starting, the degree of connection of the clutch and by that the torque transmitted from the engine to the input shaft of the gearbox according to a determined relationship between this torque and the position of the accelerator member, and
- to carry out the control of said clutch (15) while changing said determined relationship between the clutch torque and the accelerator member position from a first such relationship in a first mode to a relationship making said clutch torque less sensitive to changes of the position of the accelerator member in a second mode when it has been determined that at said risk exists.

27. A computer program according to claim 26, **characterized in that** the computer program comprises computer program code for causing the computer:
- to control said clutch (15) while changing said relationship between the clutch torque (Tc) and accelerator member position (Ap) so that a certain change of the accelerator member position results in a smaller increase of the clutch torque when starting the vehicle in said second mode instead of in said first mode.

28. A computer program according to claim 27, **characterized in that** the computer program comprises computer program code for causing the computer:
- to control said clutch (15) in said second mode from a state of total disconnection to a state of fully engaged connection of the output shaft of the engine with respect to the input shaft of said gearbox so that the result in clutch torque from a change of accelerator member position will be reduced by 20%-70%, preferably at least 30%, with respect to said first mode.

29. A computer program according to any of claims 26-28, **characterized in that** the computer program comprises computer program code for causing the computer:
- to change said relationship between clutch torque and accelerator member position so that the clutch torque will react more slowly to a change to said accelerator member position in said second mode than in said first mode, so that it will take longer time for the clutch torque to reach a value corresponding to a position of said accelerator member when this has been moved to this position.

30. A computer program according to claim 29, **characterized in that** the computer program comprises computer program code for causing the computer, for a vehicle having means (30-35) for sensing rotational speeds of wheels of the vehicle and comparing these rotational speeds for determining whether any wheel is spinning, during driving of said motor vehicle:
- to calculate and store information about the torque on a driven wheel axle of the vehicle upon occurrence of said spinning,
- to compare, in said second mode during the operation of starting the vehicle, the actual torque on said driven wheel axle with said values thereof stored, and
- to control the clutch (15) so that the reaction of the clutch torque to a change of said accelerator member position is slowed down even more as soon as said torque comes close to said value stored.

31. A computer program product comprising a data storage medium readable by an electronic unit, a computer program according to any of claims 26-30 being stored on said data storage medium.

32. An electronic control unit comprising an execution means, a memory connected to the execution means and a data storage medium connected to the execution means, a computer program according to any of claims 26-30 being stored on said data storage medium.

## Patentansprüche

1. System zum Steuern eines Startbetriebs eines stillstehenden Kraftfahrzeugs auf einer Straßenoberfläche, wobei das Kraftfahrzeug versehen ist mit:
einer Brennkraftmaschine (13),
einem Automatikgetriebe als Gangschaltung (17),
einer Kupplung (15) zum Verbinden und Trennen einer Abtriebswelle der Brennkraftmaschine hinsichtlich einer Antriebswelle der Gangschaltung, und
einem Beschleunigerglied (27), das eingerichtet ist, um zur Anforderung eines Drehmoments betätigt zu werden, das durch die Kupplung von der Brennkraftmaschine zu der Antriebswelle und durch eine Abtriebswelle der Gangschaltung zu einer Antriebswelle des Fahrzeugs zu übertragen ist, wobei das System eine Steuereinheit (28) zum Steuern der Kupplung umfasst und die eingerichtet ist, um in dem Startbetrieb den Verbindungsgrad der Kupplung zu steuern und dadurch das Drehmoment, das von der Brennkraftmaschine zu der Antriebswelle der Gangschaltung gemäß einer bestimmten Beziehung zwischen diesem Drehmoment und der Position des Beschleunigerglieds übertragen wird,
**dadurch gekennzeichnet, dass** das System eine Anordnung (42) umfasst, die eingerichtet ist, um in dem Startbetrieb zu bestimmen, ob ein Risiko existiert, das die Straßenoberfläche, auf der das Kraftfahrzeug steht, rutschig ist, und um Informationen bezüglich dieser Bestimmung zu der Steuereinheit zu senden, und dass die Steuereinheit (28) eingerichtet ist, um die bestimmte Beziehung zwischen dem Kupplungsdrehmoment und der Beschleunigergliedposition von einer ersten derartigen Beziehung in einer ersten Betriebsart zu einer Beziehung zu ändern, die das Kupplungsdrehmoment weniger empfindlich für Änderungen der Position des Beschleunigerglieds in einer zweiten Betriebsart macht, wenn die Anordnung bestimmt hat, dass das Risiko existiert.

2. System gemäß Anspruch 1, **dadurch gekennzeichnet, dass** die Steuereinheit (28) eingerichtet ist, um die Beziehung zwischen einem Kupplungsdrehmoment (Tc) und einer Beschleunigergliedposition (Ap) derart zu verändern, dass eine gewisse Änderung der Beschleunigergliedposition zu einer kleineren Erhöhung eines Kupplungsdrehmoments führt, wenn das Fahrzeug in der zweiten Betriebsart an Stelle der ersten Betriebsart gestartet wird.

3. System gemäß Anspruch 2, **dadurch gekennzeichnet, dass** die Steuereinheit (28) eingerichtet ist, um die Kupplung (15) in der zweiten Betriebsart von einem Zustand der totalen Trennung zu einem Zustand einer volleingegriffenen Verbindung der Abtriebswelle (14) der Brennkraftmaschine (13) hinsichtlich der Antriebswelle (16) der Gangschaltung (17) derart zu steuern, dass das Ergebnis in dem Kupplungsdrehmoment (Tc) von einer Änderung der Beschleunigergliedposition (Ap) hinsichtlich der ersten Betriebsart um 20 Prozent bis 70 Prozent, vorzugsweiße zumindest 30 Prozent verringert wird.

4. System gemäß zumindest einem der vorangegangenen Ansprüche, **dadurch gekennzeichnet, dass** die Steuereinheit (28) eingerichtet ist, um die Beziehung zwischen dem Kupplungsdrehmoment und der Beschleunigergliedposition derart zu ändern, dass das Kupplungsdrehmoment (Tc) in der zweiten Betriebsart langsamer auf eine Änderung der Beschleunigergliedposition (Ap) als in der ersten Betriebsart reagiert, so dass es für das Kupplungsdrehmoment länger dauert, einen Wert zu erreichen, der einer Position des Beschleunigerglieds entspricht, wenn dieses zu dieser Position bewegt wurde.

5. System gemäß Anspruch 4 zum Steuern des Startbetriebs eines Kraftfahrzeugs, weiterhin umfassend eine Einrichtung (30 - 35) zum Erfassen von Drehgeschwindigkeiten von Rädern des Fahrzeugs und zum Vergleichen (36) dieser Drehgeschwindigkeiten zum Bestimmen, ob während des Fahrens des Kraftfahrzeugs irgendein Rad durchdreht, **dadurch gekennzeichnet, dass** das System eine Einrichtung (40) umfasst, die eingerichtet ist, um Informationen bezüglich des Drehmoments auf einer Radtriebachse (3) des Fahrzeugs bei Auftreten des Durchdrehens zu berechnen und zu speichern, und dass die Steuereinheit (28) in der zweiten Betriebsart während des Startbetriebs des Fahrzeugs eingerichtet ist, um das Istdrehmoment auf der Radtriebachse mit dem gespeicherten Wert zu vergleichen, und sobald das Drehmoment in einen gewissen Abstand zu dem gespeicherten Wert kommt, die Reaktion des Kupplungsdrehmoments auf eine Änderung der Beschleunigergliedposition noch mehr zu verlangsamen.

6. System gemäß zumindest einem der vorangegangenen Ansprüche zum Steuern des Startbetriebs eines Kraftfahrzeugs, weiterhin umfassend eine Einrichtung (30 - 35) zum Erfassen von Drehgeschwindigkeiten von Rädern des Fahrzeugs und zum Vergleichen (36) dieser Drehgeschwindigkeiten, um während eines Fahrens des Kraftfahrzeugs zu bestimmen, ob irgendeines der Räder durchdreht, **dadurch gekennzeichnet, dass** das System eine Einrichtung (40) umfasst, die eingerichtet ist, um Informationen bezüglich des Drehmoments, das bei einer Radtriebachse angelegt ist, der Anordnung (42) zuzuführen, und dass die Anordnung eingerichtet ist, um zu bestimmen, dass ein Risiko existiert, dass die Straßenoberfläche, auf der das Kraftfahrzeug steht, rutschig ist, wenn während der Fahrt innerhalb einer vorbestimmten Zeit vor dem Startbetrieb der Vergleich zu einem gegenseitigen Unterschied der Drehgeschwindigkeiten der Räder führte, was ein Durchdrehen angibt, und das Drehmoment, das bei der Radtriebachse des Fahrzeugs angelegt ist, zur gleichen Zeit unterhalb eines vorbestimmten Werts war.

7. System gemäß zumindest einem der vorangegangenen Ansprüche zum Steuern des Startbetriebs eines Kraftfahrzeugs mit einer Traktionssteuer- (Tc) - vorrichtung (37) zum Entgegenwirken gegen einen Schlupf von Rädern des Fahrzeugs, **dadurch gekennzeichnet, dass** die Anordnung (42) eingerichtet ist, um zu bestimmen, dass ein Risiko vorliegt, dass die Straßenoberfläche, auf der das Kraftfahrzeug steht, rutschig ist, wenn die Traktionssteuervorrichtung innerhalb einer vorbestimmten Zeit vor dem Startbetrieb aktiviert wurde und ein Drehmoment bei einer Radtriebachse des Fahrzeugs während der Aktivierung unterhalb eines vorbestimmten Werts war.

8. System gemäß Anspruch 7 oder 8, **dadurch gekennzeichnet, dass** der vorbestimmte Wert des Drehmoments, das bei einer Radtriebachse des Fahrzeugs angelegt ist, unter 30 Prozent des Maximaldrehmoments liegt, das an die Radtriebachse bei normalem Reibungskoeffizienten bei einem spezifizierten Triebachsengewicht ohne Durchdrehen angelegt werden kann.

9. System gemäß zumindest einem der vorangegangenen Ansprüche zum Steuern eines Startbetriebs eines Kraftfahrzeugs, umfassend eine Differenzialsperre (39) zum Sperren des Differentials (20) einer Radtriebachse des Fahrzeugs, **dadurch gekennzeichnet, dass** die Anordnung (42) eingerichtet ist, um zu bestimmen, dass ein Risiko existiert, dass die Straßenoberfläche, auf der das Kraftfahrzeug steht, rutschig ist, wenn die Differentialsperre innerhalb einer vorbestimmten Zeit vor dem Startbetrieb aktiviert ist oder aktiviert wurde.

10. System gemäß zumindest einem der vorangegangenen Ansprüche zum Steuern eines Startbetriebs eines Kraftfahrzeugs, das eine Einrichtung (38) umfasst zum Erfassen eines möglicherweise auftretenden oder anfänglichen Blockierens von Rädern des Fahrzeugs und/oder von gegenseitig verschiedenen Drehgeschwindigkeiten von Rädern des Fahrzeugs und zum Senden, bei einem solchen Auftreten, eines ABS-Signals zu einer Bremssteuereinrichtung (49) des Fahrzeugs beim Fahren des Fahrzeugs, **dadurch gekennzeichnet, dass** das System eine Einrichtung (43) umfasst, die eingerichtet ist, um die Position eines Bremsstellglieds, wie eines Bremspedals, zu erfassen, dass die Anordnung (42) eingerichtet ist, um zu bestimmen, dass ein Risiko existiert, dass die Straßenoberfläche, auf der das Kraftfahrzeug steht, rutschig ist, wenn während des Fahrens innerhalb einer vorbestimmten Zeit vor dem Startbetrieb das ABS-Signal erzeugt wurde, und das Bremsstellglied für das Bremsen nicht jenseits einer vorbestimmten Position bewegt wurde, und der Beitrag von möglichen Hilfsbremsen, wie einer Verzögerungsbremse (24) und einer Auspuffbremse (25), auf das Bremsdrehmoment unterhalb eines vorbestimmten Werts war, als das ABS-Signal erzeugt wurde.

11. System gemäß Anspruch 10, **dadurch gekennzeichnet, dass** die Anordnung (42) eingerichtet ist, um eine Bewegung des Bremsstellglieds von weniger als 30 Prozent, vorzugsweise weniger als 20 Prozent, von dessen Maximalbewegung zum Bremsen als die vorbestimmte Position erreicht habend zu betrachten.

12. System gemäß zumindest einem der Ansprüche 6 bis 11, **dadurch gekennzeichnet, dass** die Anordnung (42) eingerichtet ist, um die Bestimmung von Auftritten innerhalb einer vorbestimmten Zeitspanne vor dem Startbetrieb zu gründen, wie 30 Minuten, 10 Minuten, 5 Minuten, 2 Minuten oder 30 Sekunden vor dem Startbetrieb.

13. System gemäß zumindest einem der vorangegangenen Ansprüche, **dadurch gekennzeichnet, dass** es ein Stellglied (100) umfasst, das durch den Fahrer steuerbar ist, zum Wechseln von der ersten in die zweite Betriebsart.

14. Verfahren zum Steuern eines Startbetriebs eines stillstehenden Kraftfahrzeugs auf einer Straßenoberfläche, wobei das Kraftfahrzeug versehen ist mit:
- einer Brennkraftmaschine (13),
- einem Automatikgetriebe als Gangschaltung (17),
- einer Kupplung (15) zum Verbinden und Trennen einer Abtriebswelle der Brennkraftmaschine hinsichtlich einer Antriebswelle der Gangschaltung, und
- einem Beschleunigerglied (27), das eingerichtet ist, um zur Anforderung eines Drehmoments zu dessen Übertragung durch die Kupplung von der Brennkraftmaschine zu der Antriebswelle und durch eine Abtriebswelle der Gangschaltung zu einer Antriebswelle des Fahrzeugs betätigt zu werden, wobei das Verfahren den Schritt umfasst:
- Steuern, in dem Startbetrieb, des Verbindungsgrads der Kupplung und dadurch des Drehmoments, das von der Brennkraftmaschine zu der Antriebswelle der Gangschaltung übertragen wurde, gemäß einer bestimmten Beziehung zwischen diesem Drehmoment und der Position des Beschleunigerglieds,
**dadurch gekennzeichnet, dass** das Verfahren weiterhin die Schritte umfasst:
- Bestimmen, in dem Startbetrieb, ob ein Risiko existiert, das die Straßenoberfläche, auf der das Kraftfahrzeug steht rutschig ist, und
- Steuern der Kupplung (15), während die bestimmte Beziehung zwischen dem Kupplungsdrehmoment (Tc) und der Beschleunigergliedposition (Ap) von einer ersten derartigen Beziehung in einer ersten Betriebsart zu einer Beziehung geändert wird, die das Kupplungsdrehmoment weniger empfindlich für Änderungen der Position des Beschleunigerglieds in einer zweiten Betriebsart macht, wenn bestimmt wurde, dass das Risiko existiert.

15. Verfahren gemäß Anspruch 14, **dadurch gekennzeichnet, dass** in dem Schritt des Steuerns der Kupplung die Beziehung zwischen dem Kupplungsdrehmoment (Tc) und der Beschleunigergliedposition (Ap) derart verändert wird, dass eine gewisse Änderung der Beschleunigergliedposition zu einer kleineren Erhöhung eines Kupplungsdrehmoments führt, wenn das Fahrzeug in der zweiten Betriebsart anstelle der ersten Betriebsart gestartet wird.

16. Verfahren gemäß Anspruch 15, **dadurch gekennzeichnet, dass** in dem Schritt des Steuerns der Kupplung (15) in der zweiten Betriebsart von einem Zustand der totalen Trennung zu einem Zustand der volleingegriffenen Verbindung der Abtriebswelle der Brennkraftmaschine hinsichtlich der Antriebswelle der Gangschaltung, diese Steuerung derart ausgeführt wird, dass das Ergebnis in dem Kupplungsdrehmoment von einer Änderung der Beschleunigergliedposition um 20 Prozent bis 70 Prozent, vorzugsweise zumindest 30 Prozent, hinsichtlich der ersten Betriebsart verringert wird.

17. Verfahren gemäß zumindest einem der Ansprüche 14 bis 16, **dadurch gekennzeichnet, dass** in dem Schritt des Steuerns der Kupplung (15) die Beziehung zwischen dem Kupplungsdrehmoment (Tc) und der Beschleunigergliedposition derart geändert wird, dass das Kupplungsdrehmoment in der zweiten Betriebsart langsamer auf eine Änderung der Beschleunigergliedposition als in der ersten Betriebsart reagieren wird, so dass es für das Kupplungsdrehmoment länger dauern wird, einen Wert zu erreichen, der einer Position des Beschleunigerglieds entspricht, wenn dieses zu dieser Position bewegt wurde.

18. Verfahren gemäß Anspruch 17 zum Steuern des Startbetriebs eines Kraftfahrzeugs, das eine Einrichtung (30 - 35) zum Erfassen von Drehgeschwindigkeiten von Rädern des Fahrzeugs und zum Vergleichen dieser Drehgeschwindigkeiten zum Bestimmen umfasst, ob irgendein Rad während des Fahrens des Kraftfahrzeugs durchdreht, **dadurch gekennzeichnet, dass** es einen Schritt des Berechnens und Speicherns von Informationen bezüglich des Drehmoments auf eine Radtriebachse des Fahrzeugs bei Auftreten des Durchdrehens umfasst, und dass in der zweiten Betriebsart während des Startbetriebs des Fahrzeugs das Istdrehmoment auf die Radtriebachse mit dessen gespeichertem Wert verglichen wird, und sobald das Drehmoment in einen bestimmten Abstand zu dem gespeicherten Wert kommt, die Reaktion des Kupplungsdrehmoments auf eine Änderung der Beschleunigergliedposition noch mehr verlangsamt wird.

19. Verfahren gemäß zumindest einem der Ansprüche 14 bis 18 zum Steuern des Startbetriebs eines Kraftfahrzeugs, das eine Einrichtung (30 - 35) zum Erfassen von Drehgeschwindigkeiten von Rädern des Fahrzeugs und zum Vergleichen dieser Drehgeschwindigkeiten umfasst, um zu bestimmen, ob irgendein Rad während der Fahrt des Kraftfahrzeugs durchdreht, **dadurch gekennzeichnet, dass** Informationen bezüglich des Drehmoments erhalten werden, das an einer Radtriebachse (3) des Fahrzeugs anliegt, und dass in dem Bestimmungsschritt bestimmt wird, dass ein Risiko existiert, dass die Straßenoberfläche, auf der das Kraftfahrzeug steht, rutschig ist, wenn während der Fahrt innerhalb einer vorbestimmten Zeit vor dem Startbetrieb der Vergleich zu einem gegenseitigen Unterschied der Drehgeschwindigkeiten der Räder führte, was ein Durchdrehen anzeigt, und das Drehmoment, das bei der Radtriebachse des Fahrzeugs angelegt ist, zur gleichen Zeit unterhalb eines bestimmten Werts war.

20. Verfahren gemäß zumindest einem der Ansprüche 11 bis 19 zum Steuern des Startbetriebs eines Kraftfahrzeugs, das eine Traktionssteuer- (Tc) -vorrichtung (37) zum Entgegenwirken gegen einen Schlupf von Rädern des Fahrzeugs aufweist, **dadurch gekennzeichnet, dass** in dem Schritt des Bestimmens bestimmt wird, dass ein Risiko existiert, dass die Straßenoberfläche, auf der das Kraftfahrzeug steht, rutschig ist, wenn die Traktionssteuervorrichtung während der Fahrt innerhalb einer vorbestimmten Zeit vor dem Startbetrieb aktiviert wurde und ein Drehmoment auf eine Radtriebachse des Fahrzeugs während der Aktivierung unterhalb eines bestimmten Werts war.

21. Verfahren gemäß Anspruch 19 und 20, **dadurch gekennzeichnet, dass** der vorbestimmte Wert des Drehmoments, das bei einer Radtriebachse (3) des Fahrzeugs angelegt ist, unterhalb von 30 Prozent des Maximaldrehmoments liegt, das bei der Radtriebachse bei einem normalen Reibungskoeffizienten bei einem spezifizierten Triebachsengewicht ohne Durchdrehen angelegt werden kann.

22. Verfahren gemäß zumindest einem der Ansprüche 14 bis 21 zum Steuern eines Startvorgangs eines Kraftfahrzeugs, umfassend eine Differentialsperre (39) zum Sperren des Differentials (20) einer Radtriebachse (3) des Fahrzeugs, **dadurch gekennzeichnet, dass** in dem Schritt des Bestimmens bestimmt wird, dass ein Risiko existiert, dass die Straßenoberfläche, auf der das Kraftfahrzeug steht, rutschig ist, wenn die Differentialsperre während der Fahrt innerhalb einer vorbestimmten Zeit vor dem Startbetrieb aktiviert ist oder aktiviert wurde.

23. Verfahren gemäß zumindest einem der Ansprüche 14 bis 22 zum Steuern eines Startbetriebs eines Kraftfahrzeugs, das eine Einrichtung (38) umfasst zum Erfassen einer möglicherweise auftretenden oder anfänglichen Blockierung von Rädern des Fahrzeugs und/oder von gegenseitig unterschiedlichen Drehgeschwindigkeiten von Rädern des Fahrzeugs, und, bei einem solchen Auftreten während der Fahrt des Fahrzeugs, zum Senden eines ABS-Signals zu einer Bremssteuereinrichtung (49) des Fahrzeugs, **dadurch gekennzeichnet, dass** es einen Schritt des Erfassens der Position eines Bremsstellglieds (26), wie eines Bremspedals, umfasst, und dass in dem Schritt des Bestimmens bestimmt wird, dass ein Risiko existiert, dass die Straßenoberfläche, auf der das Kraftfahrzeug steht, rutschig ist, wenn während der Fahrt innerhalb einer vorbestimmten Zeit vor dem Startbetrieb das ABS-Signal erzeugt wurde, und das Bremsstellglied zum Bremsen nicht jenseits einer vorbestimmten Position bewegt wurde, und der Beitrag von möglichen Hilfsbremse, wie einer Verzögerungsbremse (24) und einer Auspuffbremse (25), zu dem Bremsdrehmoment unterhalb eines vorbestimmten Werts war, als das ABS-Signal erzeugt wurde.

24. Verfahren gemäß Anspruch 23, **dadurch gekennzeichnet, dass** eine Bewegung des Bremsstellglieds unterhalb von 30 Prozent, vorzugsweise unterhalb von 20 Prozent, von dessen Maximalbewegung zum Bremsen als ein Erreichen der vorbestimmten Position betrachtet wird.

25. Verfahren gemäß zumindest einem der Ansprüche 19 bis 24, **dadurch gekennzeichnet, dass** die Bestimmung auf Auftritten innerhalb einer vorbestimmten Zeitspanne vor dem Startbetrieb basiert, wie 30 Minuten, 10 Minuten, 5 Minuten, 2 Minuten oder 30 Sekunden vor dem Startbetrieb.

26. Computerprogramm, das in den internen Speicher eines Computers ladbar ist, wobei das Computerprogramm Computerprogrammcode umfasst zum Veranlassen des Computers, für ein Kraftfahrzeug, das mit einer Brennkraftmaschine (13), einem Automatikgetriebe als Gangschaltung (17), einer Kupplung (15) zum Verbinden und Trennen einer Abtriebswelle (14) der Brennkraftmaschine hinsichtlich einer Antriebswelle (16) der Gangschaltung und einem Beschleunigerglied (27) versehen ist, das eingerichtet ist, um zum Anfordern eines Drehmoments betätigt zu werden, das durch die Kupplung von der Brennkraftmaschine zu der Antriebswelle und durch eine Abtriebswelle der Gangschaltung zu einer Antriebswelle des Fahrzeugs zu übertragen ist, um:
- zu bestimmen, in dem Startbetrieb, ob ein Risiko existiert, dass die Straßenoberfläche, auf der das Fahrzeug steht, rutschig ist,
- zu steuern, in dem Startbetrieb, des Verbindungsgrads der Kupplung und dadurch des Drehmoments, das von der Brennkraftmaschine zu der Antriebswelle der Gangschaltung zu übertragen ist, gemäß einer bestimmten Beziehung zwischen diesem Drehmoment und der Position des Beschleunigerglieds, und
- die Steuerung der Kupplung (15) auszuführen, während die bestimmte Beziehung zwischen dem Kupplungsdrehmoment und der Beschleunigergliedposition von einer ersten solchen Beziehung in einer ersten Betriebsart zu einer Beziehung geändert wird, die das Kupplungsdrehmoment weniger empfindlich für Änderungen der Position des Beschleunigerglieds in einer zweiten Betriebsart macht, wenn bestimmt wurde, dass ein Risiko existiert.

27. Computerprogramm gemäß Anspruch 26, **dadurch gekennzeichnet, dass** das Computerprogramm Computerprogrammcode umfasst, um den Computer zu veranlassen, um:
- die Kupplung (15) zu steuern, während die Beziehung zwischen dem Kupplungsdrehmoment (Tc) und einer Beschleunigergliedposition (Ap) derart geändert wird, dass eine gewisse Änderung der Beschleunigergliedposition zu einer kleineren Erhöhung des Kupplungsdrehmoments beim Starten des Fahrzeugs in der zweiten Betriebsart anstelle in der ersten Betriebsart führt.

28. Computerprogramm gemäß Anspruch 27, **dadurch gekennzeichnet, dass** das Computerprogramm Computerprogrammcode umfasst, um den Computer zu veranlassen, um:
- die Kupplung (15) in der zweiten Betriebsart von einem Zustand der totalen Trennung zu einem Zustand der voll eingegriffenen Verbindung der Abtriebswelle der Brennkraftmaschine hinsichtlich der Antriebswelle der Gangschaltung derart zu steuern, dass das Ergebnis in dem Kupplungsdrehmoment von einer Änderung der Beschleunigergliedposition um 20 Prozent bis 70 Prozent, vorzugsweise zumindest 30 Prozent hinsichtlich der ersten Betriebsart verringert wird.

29. Computerprogramm gemäß zumindest einem der Ansprüche 26 bis 28, **dadurch gekennzeichnet, dass** das Computerprogramm Computerprogrammcode umfasst, um den Computer zu veranlassen, um:
- die Beziehung zwischen dem Kupplungsdrehmoment und der Beschleunigergliedposition derart zu ändern, dass das Kupplungsdrehmoment auf eine Änderung der Beschleunigergliedposition in der zweiten Betriebsart langsamer reagieren wird als in der ersten Betriebsart, so dass es für das Kupplungsdrehmoment länger dauert, einen Wert zu erreichen, der einer Position des Beschleunigerglieds entspricht, wenn dieses in diese Position bewegt wurde.

30. Computerprogramm gemäß Anspruch 29, **dadurch gekennzeichnet, dass** das Computerprogramm Computerprogrammcode umfasst, um den Computer zu veranlassen, für ein Fahrzeug mit einer Einrichtung (30 - 35) zum Erfassen von Drehgeschwindigkeiten von Rädern des Fahrzeugs und zum Vergleichen dieser Drehgeschwindigkeiten, um zu bestimmen, ob irgendeines dieser Räder während der Fahrt des Kraftfahrzeugs durchdreht, um:
- Informationen bezüglich des Drehmoments bei einer Radtriebachse des Fahrzeugs bei Auftreten des Durchdrehens zu berechnen und zu speichern,
- in der zweiten Betriebsart während des Startbetriebs des Fahrzeugs, das Istdrehmoment auf die Radtriebachse mit dessen gespeicherten Werten zu vergleichen, und
- die Kupplung (15) derart zu steuern, dass die Reaktion des Kupplungsdrehmoments auf eine Änderung der Beschleunigergliedposition noch weiter verlangsamt wird, sobald das Drehmoment dem gespeicherten Wert nahe kommt.

31. Computerprogrammprodukt umfassend ein Datenspeichermedium, das durch eine elektronische Einheit lesbar ist, wobei ein Computerprogramm gemäß zumindest einem der Ansprüche 26 bis 30 auf dem Datenspeichermedium gespeichert ist.

32. Elektronische Steuereinheit umfassend eine Ausführungseinrichtung, einen Speicher, der mit der Ausführungseinrichtung verbunden ist, und ein Datenspeichermedium, das mit der Ausführungseinrichtung verbunden ist, wobei ein Computerprogramm gemäß zumindest einem der Ansprüche 26 bis 30 auf dem Datenspeichermedium gespeichert ist.

## Revendications

1. Système pour commander une opération de démarrage d'un véhicule automobile qui est à l'arrêt sur une surface de route, ledit véhicule automobile possédant :
- un moteur (13)
- une transmission mécanique automatisée comme boîte de vitesses (17),
- un embrayage (15) destiné à accoupler et à désaccoupler un arbre de sortie du moteur par rapport à un arbre d'entrée de ladite boîte de vitesses, et
- un organe accélérateur (27) adapté pour être actionné pour demander qu'un couple soit transmis par l'intermédiaire de l'embrayage du moteur audit arbre d'entrée et par l'intermédiaire de l'arbre de sortie de ladite boîte de vitesses à un arbre de transmission du véhicule, ledit système comprenant une unité de commande (28) destinée à commander l'embrayage et qui est adaptée, dans une opération de démarrage précitée, pour commander le degré d'accouplement de l'embrayage, et par cela le couple transmis du moteur à l'arbre d'entrée de la boîte de vitesses en accord avec une relation déterminée entre ce couple et la position de l'organe accélérateur,
**caractérisé en ce que** le système comprend un dispositif (42) adapté pour déterminer, dans une opération de démarrage précitée, s'il y a un risque pour que ladite surface de route sur laquelle le véhicule automobile est à l'arrêt soit glissante et pour envoyer une information relative à cette détermination à ladite unité de commande et **en ce que** l'unité de commande (28) est adaptée pour faire passer ladite relation déterminée entre le couple de l'embrayage et la position de l'organe accélérateur d'une première relation de ce genre dans un premier mode, à une relation qui rend ledit couple de l'embrayage moins sensible aux changements de la position de l'organe accélérateur dans un second mode lorsque ledit dispositif a déterminé que ledit risque existe.

2. Système selon la revendication 1, **caractérisé en ce que** ladite unité de commande (28) est adaptée pour changer ladite relation entre le couple de l'embrayage (Tc) et la position (Ap) de l'organe accélérateur de manière qu'un certain changement de la position de l'organe accélérateur se traduise par un plus petit accroissement du couple de l'embrayage lors du démarrage du véhicule dans ledit second mode que dans ledit premier mode.

3. Système selon la revendication 2, **caractérisé en ce que** ladite unité de commande (28) est adaptée pour commander ledit embrayage (15) dans ledit second mode pour le faire passer d'un état de désaccouplement total à un état d'accouplement entièrement en prise de l'arbre de sortie (14) du moteur (13) par rapport audit arbre d'entrée (16) de ladite boîte de vitesses (17), de sorte que le résultat obtenu dans le couple de l'embrayage (Tc) à la suite d'un changement de la position (Ap) de l'organe accélérateur sera réduit de 20 % à 70 %, de préférence d'au moins 30 %, par rapport audit premier mode.

4. Système selon une quelconque des revendications précédentes, **caractérisé en ce que** ladite unité de commande (28) est adaptée pour changer ladite relation entre le couple de l'embrayage et la position de l'organe accélérateur de manière que le couple de l'embrayage (Tc) réagisse plus lentement à un changement de ladite position (Ap) de l'organe accélérateur dans ledit second mode que dans ledit premier mode, de sorte qu'il faudra plus de temps pour que le couple de l'embrayage atteigne une valeur qui correspond à une position dudit organe accélérateur lorsque ce dernier aura été amené à cette position.

5. Système selon la revendication 4 destiné à commander ladite opération de démarrage d'un véhicule automobile, comprenant en outre des moyens (30-35) destinés à capter des vitesses de rotation de roues du véhicule et à comparer (36) ces vitesses de rotation pour déterminer si une roue patine, pendant la marche dudit véhicule automobile, **caractérisé en ce que** ledit système comprend des moyens (40) adaptés pour calculer et stocker de l'information relative au couple sur un essieu moteur (3) du véhicule lors de l'apparition dudit patinage, et **en ce que**, dans ledit second mode, pendant l'opération de démarrage du véhicule, ladite unité de commande (28) est adaptée pour comparer le couple réel sur ledit essieu moteur à ladite valeur stockée de ce couple et pour ralentir encore plus la réaction du couple de l'embrayage à un changement de la position de l'organe accélérateur dès que ledit couple parvient à moins d'une certaine distance de ladite valeur stockée,

6. Système selon une quelconque des revendications précédentes destiné à commander ladite opération de démarrage d'un véhicule automobile, comprenant en outre des moyens (30-35) destinés à détecter les vitesses de rotation de roues du véhicule et à comparer (36) ces vitesses de rotation pour déterminer si une roue platine pendant la marche dudit véhicule automobile, **caractérisé en ce que** le système comprend des moyens (40) adaptés pour transmettre une information relative au couple appliqué à un essieu moteur audit dispositif (42) et **en ce que** ledit dispositif est adapté pour déterminer qu'il y a un risque pour que ladite surface de route sur laquelle le véhicule automobile est à l'arrêt soit glissante lorsque, au cours d'une marche pendant un temps prédéterminé avant ladite opération de démarrage, ladite comparaison a donné une différence entre lesdites vitesses de rotation desdites roues qui indique un patinage et que ledit couple appliqué à l'essieu moteur du véhicule était au même moment au-dessous d'une valeur prédéterminée.

7. Système selon une quelconque des revendications précédentes destiné à commander ladite opération de démarrage d'un véhicule automobile possédant un appareil (37) de commande de l'adhérence (TC) destiné à contrecarrer le patinage des roues du véhicule, **caractérisé en ce que** ledit dispositif (42) est adapté pour déterminer qu'il y a un risque pour que ladite surface de route sur laquelle le véhicule automobile est à l'arrêt soit glissante lorsque ledit appareil de commande de l'adhérence a été activé dans un temps prédéterminé avant ladite opération de démarrage et qu'un couple appliqué à un essieu moteur du véhicule était au-dessous d'une valeur prédéterminée pendant ladite activation.

8. Système selon la revendication 6 ou 7, **caractérisé en ce que** ladite valeur prédéterminée dudit couple appliqué à un essieu moteur du véhicule automobile est au-dessous de 30 % du couple maximum qui peut être appliqué audit essieu moteur à un coefficient de frottement normal et à un poids par essieu moteur spécifié sans patinage.

9. Système selon une quelconque des revendications précédentes destiné à commander une opération de démarrage d'un véhicule automobile possédant un blocage de différentiel (39) destiné à bloquer le différentiel (20) d'un essieu moteur du véhicule, **caractérisé en ce que** ledit dispositif (42) est adapté pour déterminer qu'il y a un risque pour que ladite surface de route sur laquelle le véhicule est à l'arrêt soit glissante lorsque ledit verrouillage de différentiel est activé ou a été activé au cours de la marche dans un temps prédéterminé avant ladite opération de démarrage

10. Système selon une quelconque des revendications précédentes destiné à commander une opération de démarrage d'un véhicule automobile possédant des moyens (38) destinés à détecter un blocage éventuellement existant ou naissant des roues du véhicule et/ou des vitesses de rotation différentes des roues du véhicule et qui, en réponse à un tel fait, transmet un signal de ABS à un moyen de commande du freinage (49) du véhicule pendant la marche du véhicule, **caractérisé en ce que** le système comprend des moyens (43) adaptés pour détecter la position d'un organe d'actionnement des freins, tel qu'une pédale de frein, **en ce que** ledit dispositif (42) est adapté pour déterminer qu'il y a un risque pour que ladite surface de route sur laquelle le véhicule automobile est à l'arrêt soit glissante lorsque, au cours d'une marche pendant un temps prédéterminé avant ladite opération de démarrage, un signal de ABS précité a été créé, et que ledit organe d'actionnement des freins n'a pas été amené pour le freinage au-delà d'une position prédéterminée et que la contribution d'éventuels freins auxiliaires, tels qu'un ralentisseur (24) et qu'un frein sur échappement (25), au couple de freinage était inférieure à une valeur prédéterminée lorsque ledit signal ABS a été créé.

11. Système selon la revendication 10, **caractérisé en ce que** ledit dispositif (42) est adapté pour considérer un mouvement de l'organe d'actionnement des freins qui est inférieur à 30 %, de préférence inférieur à 20 %, de son mouvement maximum pour le freinage comme ayant atteint ladite position prédéterminée.

12. Système selon une quelconque des revendications 6 à 11, **caractérisé en ce que** ledit dispositif (42) est adapté pour baser ladite détermination relative aux faits produits dans une période de temps prédéterminée avant ladite opération de démarrage telle que 30 minutes, 10 minutes, 5 minutes, 2 minutes ou 30 secondes avant ladite opération de démarrage.

13. Système selon une quelconque des revendications précédentes, **caractérisé en ce qu'**il comprend un organe d'actionnement (100) pouvant être commandé par le conducteur pour passer dudit premier mode audit second mode.

14. Procédé pour commander une opération de démarrage d'un véhicule automobile qui est à l'arrêt sur une surface de route, ledit véhicule automobile possédant :
- un moteur (13)
- une transmission mécanique automatisée comme boîte de vitesses (17),
- un embrayage (15) destiné à accoupler et à désaccoupler un arbre de sortie du moteur par rapport à un arbre d'entrée de ladite boîte de vitesses, et
- un organe accélérateur (27) adapté pour être actionné pour demander qu'un couple soit transmis par l'intermédiaire de l'embrayage du moteur audit arbre d'entrée et, par l'intermédiaire de l'arbre de sortie de ladite boîte de vitesses à un arbre de transmission du véhicule, ledit procédé comprenant les étapes consistant à :
- commander, dans ladite opération de démarrage, le degré d'accouplement de l'embrayage, et par cela le couple transmis du moteur à l'arbre d'entrée de la boîte de vitesses en accord avec une relation déterminée entre ce couple et la position de l'organe accélérateur,
**caractérisé en ce que** le procédé comprend en outre les étapes consistant à :
- déterminer, dans une opération de démarrage précitée, s'il y a un risque pour que ladite surface de route sur laquelle le véhicule automobile est à l'arrêt soit glissante, et
- commander ledit embrayage (15) pendant le passage de ladite relation déterminée entre le couple de l'embrayage (Tc) et la position (Ap) de l'organe accélérateur d'une première relation de ce genre dans un premier mode, à une relation qui rend ledit couple de l'embrayage moins sensible aux changements de la position de l'organe accélérateur dans un second mode lorsqu'il a été déterminé que ledit risque existe.

15. Procédé selon la revendication 14, **caractérisé en ce que**, dans ladite étape de commande dudit embrayage, ladite relation entre le couple de l'embrayage (Tc) et la position (Ap) de l'organe accélérateur est changée de manière qu'un certain changement de la position de l'organe accélérateur se traduise par un plus petit accroissement du couple de l'embrayage lors du démarrage du véhicule dans ledit second mode que dans ledit premier mode

16. Procédé selon la revendication 15, **caractérisé en ce que**, dans ladite étape de commande dudit embrayage (15) dans ledit second mode d'un état de désaccouplement total à un état d'accouplement entièrement en prise de l'arbre de sortie du moteur par rapport à l'arbre d'entrée de ladite boîte de vitesses, cette commande est exécutée de telle sorte que le résultat obtenu dans le couple de l'embrayage à la suite d'un changement de la position de l'organe accélérateur sera réduit de 20 % à 70 %, de préférence d'au moins 30 %, par rapport audit premier mode

17. Procédé selon une quelconque des revendications 14 à 16, **caractérisé en ce que**, dans ladite étape de commande dudit embrayage (15), ladite relation entre le couple de l'embrayage (Tc) et la position de l'organe accélérateur est changée de manière que le couple de l'embrayage réagisse plus lentement à un changement de ladite position de l'organe accélérateur dans ledit second mode que dans ledit premier mode, de sorte qu'il faudra plus de temps pour que le couple de l'embrayage atteigne une valeur qui correspond à une position dudit organe accélérateur lorsque ce dernier aura été amené à cette position.

18. Procédé selon la revendication 17 pour commander ladite opération de démarrage d'un véhicule automobile comprenant des moyens (30-35) destinés à capter des vitesses de rotation de roues du véhicule et à comparer ces vitesses de rotation pour déterminer si une roue platine, pendant la marche dudit véhicule automobile, **caractérisé en ce qu'**il comprend une étape consistant à calculer et à stocker de l'information relative au couple sur un essieu moteur du véhicule lors de l'apparition dudit patinage, et **en ce que**, dans ledit second mode, pendant l'opération de démarrage du véhicule, le couple réel sur ledit essieu moteur est comparé à ladite valeur stockée de ce couple et que la réaction du couple de l'embrayage à un changement de la position de l'organe accélérateur est encore plus ralentie dès que ledit couple parvient à moins d'une certaine distance de ladite valeur stockée.

19. Procédé selon une quelconque des revendications 14 à 18 pour commander ladite opération de démarrage d'un véhicule automobile possédant des moyens (30-35) destinés à détecter des vitesses de rotation de roues du véhicule et à comparer ces vitesses de rotation pour déterminer si une roue patine, pendant la marche dudit véhicule automobile, **caractérisé en ce que** de l'information relative au couple appliqué à un essieu moteur (3) du véhicule est obtenue et **en ce que**, dans ladite étape de détermination, il est déterminé qu'il y a un risque pour que ladite surface de route sur laquelle le véhicule automobile est à l'arrêt soit glissante lorsque, au cours de la marche pendant un temps prédéterminé avant ladite opération de démarrage, ladite comparaison a eu pour résultat une différence entre lesdites vitesses de rotation des roues qui indique un patinage et que ledit couple appliqué à l'essieu moteur du véhicule était au même moment au-dessous d'une valeur prédéterminée.

20. Procédé selon une quelconque des revendications 14 à 19 pour commander ladite opération de démarrage d'un véhicule automobile possédant un appareil (37) de commande de l'adhérence (TC) destiné à contrecarrer le patinage des roues du véhicule, **caractérisé en ce que**, dans ladite étape de détermination, il est déterminé qu'il y a un risque pour que ladite surface de route sur laquelle le véhicule automobile est à l'arrêt soit glissante lorsque ledit appareil de commande de l'adhérence a été activé au cours de la marche pendant un temps prédéterminé avant ladite opération de démarrage et qu'un couple sur un essieu moteur du véhicule était au-dessous d'une valeur prédéterminée pendant ladite activation.

21. Procédé selon la revendication 19 ou 20, **caractérisé en ce que** ladite valeur prédéterminée dudit couple appliqué à un essieu moteur du véhicule automobile est au-dessous de 30 % du couple maximum qui peut être appliqué audit essieu moteur à un coefficient de frottement normal et à un poids par essieu moteur spécifié sans patinage.

22. Procédé selon une quelconque des revendications 14 à 21 pour commander une opération de démarrage d'un véhicule automobile possédant un blocage de différentiel (39) destiné à bloquer le différentiel (20) d'un essieu moteur (3) du véhicule, **caractérisé en ce que**, dans ladite étape de détermination, il est déterminé qu'il y a un risque pour que ladite surface de route sur laquelle le véhicule est soit glissante lorsque ledit verrouillage de différentiel est activé ou a été activé au cours de la marche dans un temps prédéterminé avant ladite opération de démarrage

23. Procédé selon une quelconque des revendications 14 à 22 pour commander une opération de démarrage d'un véhicule automobile possédant des moyens (38) destinés à détecter un blocage éventuellement existant ou naissant des roues du véhicule et/ou des vitesses de rotation différentes des roues du véhicule et qui, en réponse à un tel fait, transmettent un signal de ABS à un moyen de commande du freinage (49) du véhicule pendant la marche du véhicule, **caractérisé en ce qu'**il comprend une étape de détection de la position d'un organe d'actionnement des freins (26), tel qu'une pédale de frein, et **en ce que**, dans ladite étape de détermination, il est déterminé qu'il y a un risque pour que ladite surface de route sur laquelle le véhicule automobile est à l'arrêt soit glissante lorsque, au cours de la marche pendant un temps prédéterminé avant ladite opération de démarrage, un signal de ABS précité a été créé, que ledit organe d'actionnement de frein n'a pas été amené pour le freinage au-delà d'une position prédéterminée et que la contribution d'éventuels freins auxiliaires, tels qu'un ralentisseur (24) et qu'un frein sur échappement (25), au couple de freinage était inférieure à une valeur prédéterminée lorsque ledit signal de ABS a été créé.

24. Procédé selon la revendication 23, **caractérisé en ce qu'**un mouvement dudit organe d'actionnement des freins qui est de moins de 30 %, de préférence de moins de 20 %, de son mouvement maximum pour le freinage est considéré comme ayant atteint ladite position prédéterminée.

25. Procédé selon une quelconque des revendications 19 à 24, **caractérisé en ce que** ladite détermination est basée sur les faits produits dans une période de temps prédéterminée avant ladite opération de démarrage, telle que 30 minutes, 10 minutes, 5 minutes, 2 minutes ou 30 secondes avant ladite opération de démarrage.

26. Programme d'ordinateur pouvant être chargé dans la mémoire interne d'un ordinateur, lequel programme d'ordinateur comprend un code de programme d'ordinateur destiné à amener l'ordinateur, pour un véhicule automobile possédant un moteur (13), une transmission mécanique automatisée comme boîte de vitesses (17), un embrayage (15) destiné à accoupler et à désaccoupler un arbre de sortie (14) du moteur par rapport à un arbre d'entrée (16) de ladite boîte de vitesses, et un organe accélérateur (27) adapté pour être actionné pour demander qu'un couple soit transmis, par l'intermédiaire de l'embrayage, du moteur à un arbre d'entrée et, par l'intermédiaire d'un arbre de sortie de ladite boîte de vitesses, à un arbre de transmission du véhicule ;
- à déterminer, dans ladite opération de démarrage, s'il y a un risque pour que ladite surface de route sur laquelle le véhicule automobile est à l'arrêt soit glissante,
- à commander dans ladite opération de démarrage, le degré d'accouplement de l'embrayage, et par cela le couple transmis du moteur à l'arbre d'entrée de la boîte de vitesses, en accord avec une relation déterminée entre ce couple et la position de l'organe accélérateur, et
- à exécuter la commande dudit embrayage (15), en même temps qu'il fait passer ladite relation prédéterminée entre le couple d'embrayage et la position de l'organe accélérateur d'une première relation de ce type dans un premier mode à une relation qui rend ledit couple d'embrayage moins sensible aux changements de la position de l'organe accélérateur dans un second mode lorsqu'il a été déterminé qu'un tel risque existe.

27. Programme d'ordinateur selon la revendication 26, **caractérisé en ce que** le programme d'ordinateur comprend un code de programme d'ordinateur destiné à amener l'ordinateur :
- à commander ledit embrayage (15) pendant le changement de ladite relation entre le couple de l'embrayage (Tc) et la position (Ap) de l'organe accélérateur de manière qu'un certain changement de la position de l'organe accélérateur se traduise par un plus petit accroissement du couple de l'embrayage lors du démarrage du véhicule dans ledit second mode que dans ledit premier mode.

28. Programme d'ordinateur selon la revendication 27, **caractérisé en ce que** le programme d'ordinateur comprend un code de programme d'ordinateur destiné à amener l'ordinateur :
- à commander ledit embrayage (15) dans ledit second mode d'un état de désaccouplement total à un état entièrement en prise de l'arbre de sortie du moteur par rapport à l'arbre d'entrée de ladite boîte de vitesses, de sorte que le résultat obtenu dans le couple de l'embrayage à la suite d'un changement de la position de l'organe accélérateur sera réduit de 20 % à 70 %, de préférence d'au moins 30 %, par rapport audit premier mode.

29. Programme d'ordinateur selon une quelconque des revendications 26 à 28, **caractérisé en ce que** le programme d'ordinateur comprend un code de programme d'ordinateur destiné à amener l'ordinateur :
- à changer ladite relation entre le couple de l'embrayage et la position de l'organe accélérateur de manière que le couple de l'accélérateur réagisse plus lentement à un changement de ladite position de l'organe accélérateur dans ledit second mode que dans ledit premier mode, de sorte qu'il faudra plus de temps au couple de l'embrayage pour atteindre une valeur correspondant à une position dudit organe accélérateur lorsque ce dernier a été amené à cette position.

30. Programme d'ordinateur selon la revendication 29, **caractérisé en ce que** ledit programme d'ordinateur comprend un code de programme d'ordinateur destiné à amener l'ordinateur, pour un véhicule possédant des moyens (30-35) destinés à détecter des vitesses de rotation des roues du véhicule et à comparer ces vitesses de rotation pour déterminer si une roue patine pendant la marche dudit véhicule automobile ;
- à calculer et à stocker de l'information relative au couple sur un essieu moteur du véhicule lors de l'apparition dudit patinage,
- à comparer, dans ledit second mode pendant l'opération de démarrage du véhicule, le couple actuel sur ledit essieu moteur auxdites valeurs stockées de ce couple et
- à commander l'embrayage (15) de manière que la réaction du couple de l'embrayage à un changement de la position de l'organe accélérateur soit ralentie encore plus dès que ledit couple devient proche de ladite valeur stockée.

31. Produit programme d'ordinateur comprenant un support de stockage de données pouvant être lu par une unité électronique, un programme d'ordinateur selon une quelconque des revendications 26 à 30 étant stocké sur le dit support de stockage de données.

32. Unité de commande électronique comprenant des moyens d'exécution, une mémoire connectée aux moyens d'exécution et un support de stockage de données connecté aux moyens d'exécution, un programme d'ordinateur selon une quelconque des revendications 26 à 30 étant stocké dans ledit support de stockage de données.
